# EUROPÄISCHE PATENTSCHRIFT

(11) **EP 3 914 396 B1**
(45) Veröffentlichungstag und Bekanntmachung des Hinweises auf die Patenterteilung: **16.07.2025**
(21) Anmeldenummer: 20704396.9
(22) Anmeldetag: 21.01.2020
(51) Int. Cl.: B05C 1/00, B05C 1/08, B29C 48/155, B29C 48/35, B05C 11/04

(54) **VORRICHTUNG ZUM BEREITSTELLEN VON KLEBSTOFF**
DEVICE FOR PROVIDING ADHESIVE
DISPOSITIF DE FOURNITURE DE COLLE

(30) Priorität: 22.01.2019 DE 102019101539
(43) Veröffentlichungstag der Anmeldung: 01.12.2021
(73) Patentinhaber: Schulte-Göbel, Christof, 59872 Meschede (DE)
(72) Erfinder: Schulte-Göbel, Christof, 59872 Meschede (DE)
(74) Vertreter: Kalkoff & Partner Patentanwälte mbB
(86) Internationale Anmeldenummer: PCT/EP2020/051426
(87) Internationale Veröffentlichungsnummer: WO 2020/152176

(56) Entgegenhaltungen:
- EP-A1- 1 080 865
- EP-A2- 1 535 668
- EP-A2- 1 844 917
- EP-B1- 1 535 668
- JP-A- 2005 000 887
- US-A- 3 106 480
- US-A- 3 568 636

## Beschreibung

Die Erfindung betrifft eine Vorrichtung und ein Verfahren zum Bereitstellen von Klebstoff.

Die EP 3 406 409 A1 beschreibt eine Vorrichtung und ein Verfahren zum Bereitstellen von Klebstoff. Der Klebstoff wird aus einem Vorratsbehälter z. B. mittels einer Sprühvorrichtung auf eine Walze aufgetragen und durch die rotierende Walze von dort auf ein Werkstück, hier eine zu beschichtende Kante, übertragen. Die DE 40 12 726 A1 beschreibt eine Vorrichtung zum Auftragen von Klebstoff mit einem in der Höhe verstellbaren Längsschlitz, aus dem Klebstoff auf einer Walze abgelegt wird. Die EP 3 213 824 A1 beschreibt eine vergleichbare Vorrichtung zum Auftragen von Klebstoff, wobei jedoch ein Abstreifer die Walze nach dem Ablegen des Klebstoffs von Klebstoffresten reinigt. Die Klebstoffreste werden nach dem Abstreifen über ein Leitblech abgeführt. Weitere Vorrichtungen und Verfahren zum Bereitstellen von Klebstoff zeigen die EP 1 844 917, die EP 1 808 865 A und die US 3 568 636 A.

Es ist Aufgabe der Erfindung, eine effizient und sauber arbeitende Vorrichtung sowie ein Verfahren zum Bereitstellen von Klebstoff zur Verfügung zu stellen.

Die Lösung der Aufgabe erfolgt durch eine Vorrichtung gemäß Anspruch 1 und ein Verfahren gemäß Anspruch 9. Die abhängigen Ansprüche beziehen sich auf vorteilhafte Ausführungsformen.

Die erfindungsgemäße Vorrichtung zum Bereitstellen von Klebstoff weist eine Fördereinheit, eine Erwärmungseinheit und eine Dosiereinheit auf, die gemäß der Erf indung in Kombination miteinander eingesetzt werden, die aber auch offengelegt, aber nicht beansprucht jeweils für sich genommen mit anderen, auch mit bekannten Förder-, Erwärmungs- und/oder Dosiereinheiten eingesetzt werden können.

Die Fördereinheit weist ein erstes Fördermittel, einen ersten Einlass und einen ersten Auslass auf, durch welche ein zumindest teilweise als Feststoff vorliegender Klebstoff gefördert wird. Eine Beschickung der Fördereinheit mit Klebstoff erfolgt vorteilhaft aus einem Vorrat, der dem ersten Einlass zugeordnet ist. Der Vorrat kann als Zuführorgan ausgebildet sein, z. B. als Transportband oder als Schnecke, dem bspw. ein endlicher oder bevorzugt ein kontinuierlich unendlicher Vorrat an Klebstoff zugeführt wird. Bevorzugt ist der Vorrat als Speicherbehälter ausgebildet, dem der Klebstoff durch Schwerkraft entnommen wird. Die Fördereinheit kann eine erste Förderrichtung aufweisen, in der der Klebstoff vom ersten Einlass zum ersten Auslass gefördert wird. Die Fördereinheit ist meist von einem Gehäuse, bevorzugt von einem rohrförmigen Gehäuse, umschlossen, das einen ersten Förderkanal bildet, der sich in der ersten Förderrichtung vom ersten Einlass zum ersten Auslass erstreckt. Die Fördereinheit weist bevorzugt eine Länge zwischen 5 cm und 50 cm, besonders bevorzugt zwischen 10 cm und 25 cm auf. In einem Förderkanal kann ohne Weiteres auch ein höherer Förderdruck aufgebaut werden, was zu einer Erhöhung der Klebstofftemperatur bzw. einem Erweichen des Klebstoffs beitragen kann. Das Gehäuse ist bevorzugt luft- und/oder gasdicht ausgebildet, so dass der Klebstoff nicht unerwünscht vorzeitig reagiert. Das erste Fördermittel erstreckt sich mindestens abschnittweise zwischen dem ersten Einlass und dem ersten Auslass und ist in der Regel im Förderkanal angeordnet. Es muss mindestens den Klebstoff vom Einlass zum Auslass fördern, wie es z. B. ein Förderband leistet. Bevorzugt prägt das erste Fördermittel dem Klebstoff einen Förderdruck auf. Der Förderdruck liegt bevorzugt zwischen 0,1 bar und 100 bar, besonders bevorzugt zwischen 1 bar und 30 bar. Details zum Fördermittel sind nachstehend ausgeführt.

Offengelegt, aber nicht beansprucht liegt der Klebstoff flüssig oder pastös vor. Gemäß der Erfindung liegt der Klebstoff zumindest Teilweise als Feststoff vor. Er kann bevorzugt partikelförmig, bspw. granuliert und/oder pulverförmig vorliegen, aber auch als stückiger Feststoff, z. B. in Blöcken eingesetzt werden. Der Fördereinheit kann ein Zerkleinerungsmittel, bspw. ein Häcksler, vorgeschaltet sein.

Die erfindungsgemäße Vorrichtung zum Bereitstellen von Klebstoff weist eine Erwärmungseinheit auf, mit einem zweiten Einlass und einem zweiten Auslass, sowie einem ersten Heizmittel zur Erweichung und/oder Verflüssigung des Klebstoffs. Der zweite Einlass ist bevorzugt dem ersten Auslass zugeordnet, so dass der Klebstoff verlustfrei in die Erwärmungseinheit und ggf. durch diese hindurch gefördert wird. Die Erwärmungseinheit weist bevorzugt eine zweite Förderrichtung auf, in welche der wenigstens teilweise erwärmte Klebstoff sich vom zweiten Einlass zum zweiten Auslass bewegt und/oder bewegt wird. Es ist möglich, dass die erste Förderrichtung und die zweite Förderrichtung unterschiedlich orientierte Richtungen sind. Die Erwärmungseinheit weist vorteilhaft ein Gehäuse auf, in dem sich ein zweiter Förderkanal in der zweiten Förderrichtung vom zweiten Einlass zum zweiten Auslass erstreckt. Die Länge der Erwärmungseinheit beträgt bevorzugt zwischen 10 cm und 50 cm, besonders bevorzugt zwischen 15 cm und 30 cm, meist 20 cm. Das Gehäuse kann bevorzugt luft- und/oder gasdicht ausgebildet sein.

Das erste Heizmittel kann den Klebstoff direkt oder indirekt erwärmen. Als Energiequellen für das Erwärmen des Klebstoffs können z. B. Gas, Öl oder Strom eingesetzt werden. Eine direkte Erwärmung kann durch Gas- oder Ölflammen erfolgen, die das Gehäuse der Erwärmungseinheit erhitzen. Das indirekte Beheizen kann durch die Anordnung eines oder mehrerer Heizkanäle z. B. für Dampf oder Thermoöl in einer Gehäusewand oder ein oder mehrerer Heizleitungen bzw. -stäbe im Gehäuse oder an dem Gehäuse der Erwärmungseinheit realisiert werden. Bevorzugt werden eine oder mehrere Heizspiralen zum Erwärmen des Klebstoffs eingesetzt, die sich zwischen Einlass und Auslass mindestens abschnittsweise um den zweiten Förderkanal herum erstrecken. Als Energieträger kommen bevorzugt neben elektrischem Strom bspw. Wasser, Gas oder Thermoöl zum Einsatz. Heizkanäle, Heizstäbe, Heizspiralen oder Heizleitungen in der Gehäusewand oder um die Gehäusewand herum bewirken eine indirekte Erwärmung des Klebstoffs über die Innenwand des Gehäuses als Grenzfläche. Gemäß einer weiter bevorzugten Ausführungsform ist das erste Heizmittel als wenigstens zweistufige Heizspirale, Heizstab, Heizkanal oder Heizleitung ausgebildet, wobei dann jede Stufe bevorzugt separat steuer- und/oder regelbar bzw. schaltbar ist. Vorteilhaft liegt die Verarbeitungstemperatur des Klebstoffs zwischen 15°C und 250°C. Die installierte Heizleistung ist dazu ausgelegt, den Klebstoff, der die Erwärmungseinheit durchläuft, auf die jeweilige Verarbeitungstemperatur zu erwärmen. Die Heizleistung kann dabei die Art des Klebstoffs und/oder des gewünschten Grads der Erweichung berücksichtigen. Der erwärmte, in seiner Viskosität i. d. R. reduzierte, oft verflüssigte Klebstoff kann bevorzugt durch den durch das erste Fördermittel aufgeprägten Förderdruck durch den zweiten Einlass bis wenigstens zum zweiten Auslass gefördert werden. Die erfindungsgemäße Vorrichtung zum Bereitstellen von Klebstoff weist eine für sich genommen als neu und erfinderisch anzusehende Dosiereinheit mit einem Dosiereinlass, einem Längsschlitz, sowie einer Walze auf. Die Dosiereinheit kann aus einem Material mit bevorzugt hoher Wärmeleitfähigkeit gefertigt sein, bspw. Aluminium, Kupfer oder aus einem anderen Werkstoff mit entsprechenden Eigenschaften. Der Dosiereinlass ist bevorzugt dem zweiten Auslass zugeordnet. Die Dosiereinheit weist bevorzugt eine dritte Förderrichtung auf, in welche der erwärmte Klebstoff sich vom Dosiereinlass zum Längsschlitz bewegt und/oder bewegt wird. Es ist möglich, dass die zweite Förderrichtung und die dritte Förderrichtung unterschiedlich orientierte Richtungen sind. Die Dosiereinheit ist bevorzugt von einem Gehäuse umschlossen, das einen dritten Förderkanal bildet, der sich in der dritten Förderrichtung vom Dosiereinlass zum Längsschlitz erstreckt. Der Klebstoff tritt aus dem Längsschlitz aus und wird vorteilhaft unmittelbar auf der Oberfläche der Walze abgelegt, ohne weitere Hilfs- oder Fördermittel wie z. B. ein Mittel zum Erhöhen des Förderdrucks oder eine Düse.

Der dritte Förderkanal kann auf kürzester Strecke zwischen dem Dosiereinlass und dem Längsschlitz verlaufen, er kann aber auch über eine längere Strecke ausgebildet sein, um z. B. die Temperatur des Klebstoffs bzw. die Viskosität des Klebstoffs besser einstellen zu können. Der Förderkanal mündet vorteilhaft im Längsschlitz. Er kann sich, insbesondere vor der Mündung in den Längsschlitz, verzweigen, um eine gleichmäßige Verteilung des Klebstoffs zu gewährleisten. Der dritte Förderkanal ist nach einer vorteilhaften Ausführung durch zweite Heizmittel beheizbar, die nachstehend näher erläutert sind, so dass die Viskosität bzw. die Temperatur des Klebstoffs unmittelbar vor dem Auftrag eingestellt werden können.

Der Längsschlitz ist bevorzugt langgestreckt und bevorzugt als Bohrung in der Dosiereinheit ausgeführt. Der langgestreckte Längsschlitz weist eine Länge auf, welche größer als seine Breite ist. Der Längsschlitz ist bevorzugt parallel zur Rotationsachse der nachfolgend erläuterten Walze angeordnet. Der Klebstoff kann durch den Längsschlitz bevorzugt unmittelbar auf der Oberfläche der Walze abgelegt werden.

Vorteilhaft tritt der Klebstoff über die Länge des Längsschlitzes in homogener Weise aus. Es kann aber auch, über die Länge des Längsschlitzes gesehen, z. B. in der Mitte mehr oder weniger Klebstoff austreten als an den Enden. Dies kann beispielsweise durch eine Verzweigung des dritten Förderkanals erreicht werden, der die Enden des Längsschlitzes oder die Mitte des Längsschlitzes mit mehr oder mit weniger Klebstoff versorgt. Die Klebstoffmenge kann aber auch z. B. über die jeweilige Stellposition reguliert werden. Der Klebstoff bildet dann auf der Oberfläche der Walze vorteilhaft eine gleichmäßig geschlossene Klebstoffschicht oder eine abschnittweise aufgetragene, z. B. in Streifen aufgetragene Klebstoffschicht.

Nach einer vorteilhaften Ausführung ist die Länge des Längsschlitzes, wie nachfolgend erläutert wird, einstellbar, z. B. um die Breite der Klebstoffschicht, die auf der Walze abgelegt wird, an die Dicke des mit Klebstoff zu beschichtenden Werkstücks anzupassen.

Die Breite des Längsschlitzes kann optional ebenfalls in einer Vielzahl von Stellpositionen eingestellt werden, bevorzugt jedoch wenigstens in einer schmalen und einer breiten Stellposition. Die Breite des Längsschlitzes kann über die Länge gesehen variieren. Somit kann der Längsschlitz in einer beispielhaften Ausführung streifenförmig mit gleicher Breite über die gesamte Länge ausgebildet sein, in anderen Ausführungen aber auch oval, konvex oder bikonvex bzw. konkav.

Der Längsschlitz weist in einer einfachen Ausführung eine Öffnung auf. Alternativ kann sich der Längsschlitz aus mehreren Öffnungen zusammensetzen. Die Gestalt der Öffnungen kann oval, mehreckig, rund oder schlitzförmig sein. Die Öffnungen können von unterschiedlicher Größe sein. Weist der Längsschlitz mehrere Öffnungen auf, so kann dies eine beliebige Kombination verschiedenförmiger Öffnungen sein. Vorteilhaft ist der Klebstoff durch mehrere Öffnungen abschnittsweise, d. h. in diskreten Abschnitten, über den Umfang der Walze und/oder über die Walzenbreite auf die Walze ablegbar. Der Abstand der Walze zum Längsschlitz kann bevorzugt zwischen 0,1 mm und 20 mm, besonders bevorzugt zwischen 0,5 mm und 5 mm liegen.

Die Walze ist bspw. ein wenigstens annähernd rotationssymmetrischer, bevorzugt ein wenigstens annähernd zylindrischer Körper. Quer zum Umfang der bevorzugt zylindrischen Walze kann diese eine Rotationsachse aufweisen, um welche sie in einer Rotationsrichtung entlang des Umfangs rotieren kann. Aus dem Längsschlitz der Dosiereinheit wird Klebstoff auf der Oberfläche der Walze abgelegt. Damit ist der Längsschlitz vorteilhaft parallel zur Rotationsachse und entsprechend quer zum Walzenumfang ausgerichtet. Die bevorzugt zylindrische Walze kann an ihren in Richtung der Rotationsachse beabstandeten Enden wenigstens annähernd kreisförmige Endflächen aufweisen. Die Walze weist dann eine Walzenbreite auf, die dem Abstand der Endflächen entspricht. Die Walze ist meist zylindrisch, es ist aber auch möglich, dass die Walzenbreite über den Umfang inkonstant ist, beispielsweise wenn ein Werkstück variabler Dicke zu beschichten ist. Ebenso ist es möglich, dass der Umfang über die Walzenbreite variabel ist, z. B. um Klebstoff auf ein ungleichmäßig geformtes Werkstück aufzutragen, z. B. eine profilierte Kante, die mit einem Kantenstreifen zu versehen ist. Der Abstand der Walze von dem Längsschlitz ist einstellbar, wobei ein Einstellmechanismus bevorzugt durch eine Steuer- und Regeleinheit steuer- und/oder regelbar ist. Die Walze kann, bevorzugt durch einen Motor, rotatorisch angetrieben sein. Alternativ kann die Walze aber auch mit dem Antrieb der das Werkstück an der Walze vorbeibewegenden Vorrichtung gekoppelt sein. Außerdem kann die Walze direkt oder indirekt beheizbar sein. Die Walze kann eine Oberfläche aufweisen, die glatt ist. Alternativ kann die Oberfläche der Walze auch ein reliefartiges Muster aufweisen. Die Walze kann im Gleichlauf mit dem zu beschichtenden Werkstück rotieren, was bevorzugt wird. Die Walze kann aber auch in Gegenrichtung zu dem zu beschichtenden Werkstück rotieren.

Die Walze ist bevorzugt wie folgt aufgebaut: auf einer zentralen Welle, die im Betrieb durch einen Antrieb in Rotation versetzt wird und die einseitig am Antrieb gelagert ist, ist eine Führung konzentrisch angeordnet. Die Führung rotiert nicht mit der Welle. Sie ist vorzugsweise mit Lagern versehen, insbesondere mit Gleitlagern. Auf die Führung wird vom freien Ende der Welle her die ebenfalls konzentrisch zur Welle ausgerichtete Walzenhülle gesteckt. Die Walzenhülle liegt an den Gleitlagern an, so dass im Betrieb ein möglichst einfaches Rotieren gewährleistet ist. Ggf. kann die Walzenhülle mit einem Griff versehen sein, der das einfache Aufstecken und Entfernen der Walzenhülle ermöglicht. Die Walzenhülle ist formschlüssig mit der Welle verbunden bzw. liegt an dieser an und wird dadurch im Betrieb ebenfalls in Rotation versetzt. Der Formschluss wird z. B. durch aneinander liegende Vorsprünge oder durch eine Nut-FederAnordnung bewirkt.

Die Walze, d. h. die Anordnung aus Welle, Führung und Walzenhülle, ggf. ergänzt durch den Antrieb, ist nach einer einfachen Ausführung feststehend, lediglich die Walzenhülle kann abgezogen und aufgesteckt werden. Diese Ausführung ist ausreichend, insbesondere dann, wenn der Längsschlitz der Dosiereinheit durch eine Abdeckung verschließbar ist. Die Abdeckung kann den Längsschlitz luftdicht und falls erforderlich lichtdicht verschließen. Sie kann vor allem in der Ruhestellung, wenn kein Werkstück mit Klebstoff beschichtet wird, das Austreten von Klebstoff verhindern. Da die Walzenhülle bei einem Wechsel einfach von der Halterung abgezogen wird und eine neue Walzenhülle aufgesteckt wird, ist ein Bewegen der Dosiereinheit oder der Walze hierfür nicht erforderlich.

Für den Fall, dass Arbeitsraum zwischen Längsschlitz und Walze gewünscht wird, kann die Walze vom Längsschlitz wegbewegt werden. Antrieb und Walze können beweglich angeordnet sein, z. B. auf einem Schlitten, der Antrieb und Walze nach oben, nach unten oder seitlich vom Längsschlitz wegbewegt. Bevorzugt können Antrieb und Walze relativ zum Längsschlitz gekippt, geschwenkt oder gedreht werden, z. B. mittels eines Gelenks oder Scharniers, dass zwischen Antrieb und Walze einerseits und einer Halterung für Antrieb und Walze andererseits angeordnet ist. Nach einer weiteren Ausführung kann auch nur die Walze mit Führung und Welle geschwenkt oder gekippt werden, z. B. wenn die Welle mit einem Kardangelenk versehen ist oder wenn die Welle zweiteilig ausgebildet ist und die beiden Teile formschlüssig miteinander verbunden werden können. Auch Kombinationen der vorstehenden Bewegungen sind möglich, z. B. ein Verschieben von Antrieb und Walze, gefolgt von einem Kippen oder Schwenken oder Drehen.

Die Walze steht im Betrieb üblicherweise aufrecht bzw. senkrecht. Auch wenn die Übertragung von Klebstoff auf die Schmalfläche eines Werkstücks schnell erfolgt, also über eine Wegstrecke die kürzer ist als der Umfang der Walze, kann nicht ausgeschlossen werden, dass Klebstoff in geringen Anteilen nach unten von der Walze abtropft. Für diesen Fall ist es zweckmäßig, am unteren Ende der Walze, z. B. im Bereich des Übergangs zwischen Walze und Antrieb, ein Auffangblech vorzusehen, dass einen Innendurchmesser aufweist, der in etwa dem Durchmesser der Walzenhülle, bevorzugt dem Durchmesser der Führung entspricht, so dass das Auffangblech die Walzenhülle bzw. die Führung abdichtend umschließt. Umschließt das Auffangblech die Führung, so ist es unterhalb der Walzenhülle angeordnet. Der Außendurchmesser des Auffangblechs ist größer als der Innendurchmesser und das Auffangblech ist zwischen Innendurchmesser und Außendurchmesser als konzentrische Rinne geformt, so dass der Klebstoff unterhalb der Walzenhülle sicher aufgefangen wird. Das Auffangblech kann feststehend ausgebildet sein oder es kann mit der Walze rotieren. Nach einer Weiterbildung kann das Auffangblech einen Auslass für aufgefangenen Klebstoff aufweisen, entweder nach Art einer Kerbe oder als Öffnung. Der aufgefangene Klebstoff kann auf diese Weise abgeführt werden.

Die erfindungsgemäße Vorrichtung zum Bereitstellen von Klebstoff weist eine erhöhte Effizienz und erhöhte Sauberkeit bei der Bereitstellung von Klebstoff auf, insbesondere, weil nur unmittelbar benötigte Klebstoffmengen vom Längsschlitz auf die Walze abgegeben werden. Außerdem bedient sie die Möglichkeit, eine breite Palette an Klebstoffen mit artgerechten Behandlungs- und Bereitstellungsmöglichkeiten zu verarbeiten. Gegenüber bekannten Varianten von Vorrichtungen zur Bereitstellung von Klebstoff, bei denen bspw. ein Klebstoff in Bereitstellungsbecken als Reservoir eingetropft oder durch eine Düse gesprüht wird, weist sich die erfindungsgemäße Vorrichtung zum Bereitstellen von Klebstoff durch einen erhöhten Wirkungsgrad aus, auch da der Klebstoff nach einem Erwärmen ohne Sauerstoffzutritt auch ohne erhöhte Exposition gegenüber Sauerstoff auf der Walze abgelegt wird. Der Klebstoff weist also beim Auftragen auf ein Werkstück maximale Reaktivität und Klebkraft auf. Außerdem treten durch das unmittelbare Bereitstellen des Klebstoffs unter Verzicht z. B. auf ein Reservoir minimale Reinigungsverluste auf, weil kein Puffer benötigt wird, der erwärmten, verarbeitungsfertigen Klebstoff bereitstellt, der nach dem Stoppen der Produktion zu entsorgen ist. Gegenüber Varianten, die bspw. Sprühdüsen verwenden, weist sich die erfindungsgemäße Vorrichtung außerdem durch eine erhöhte Gleichmäßigkeit bei dem Auftrag des Klebstoffs auf die Walze aus.

Gemäß einer bevorzugten Ausführungsform weist die erfindungsgemäße Vorrichtung wenigstens eine von einer ersten, zweiten oder dritten Schließvorrichtung auf, welche zwischen Förder- und Erwärmungseinheit bzw. zwischen Erwärmungs- und Dosiereinheit, bzw. vor dem Längsschlitz angeordnet und jeweils durch Verbindung mit einer Steuer- und/oder Regeleinheit steuer- und/oder regelbar sind. Eine nachfolgend näher erläuterte Steuer- und/oder Regeleinheit kann durch eine zentrale SPS-Steuerung realisiert werden. Dies hat den Vorteil, dass der Austritt des Klebstoffs aus dem Längsschlitz kontrolliert wird und damit Ausschuss vermieden werden kann, da nur dann frischer verarbeitungsfertiger Klebstoff bereitgestellt wird, wenn dieser gebraucht wird und auf ein bereitstehendes Werkstück aufgetragen werden kann. Bei bzw. nach einer Produktionsunterbrechung ist bei geschlossenen Schließvorrichtungen außerdem i. d. R. nur die Walze zu reinigen, da der Klebstoff ohne den Kontakt zu Sauerstoff oder einer zweiten Klebstoffkomponente bereitgestellt werden kann und somit vorher nicht reagiert. Außerdem wirkt eine Schließvorrichtung als Sicherheitseinrichtung. Eine Schließvorrichtung kann in einem der Gehäuse von Fördereinheit, Erwärmungseinheit und/oder Dosiereinheit angeordnet sein, aber auch separiert zwischen den einzelnen Einheiten.

Gemäß einer weiter bevorzugten Ausführungsform ist die Schließvorrichtung als Kugelhahn ausgebildet. Dies hat den Vorteil einer einfachen, kostengünstigen und raumsparenden Armatur, die mit Hilfe eines simplen Aktuators steuer- und/oder regelbar ist. Eine Schließvorrichtung kann aber auch als Flachschieber, Kolbenschieber, Absperrklappe, als verschließbares Ventil, als drehbares Schlitzrohr oder als ein anderes Absperrorgan ausgebildet sein.

Gemäß einer weiter bevorzugten Ausführungsform weist die Erwärmungseinheit ein zweites Fördermittel auf. Das zweite Fördermittel kann aus den Vorrichtungen gewählt werden, wie sie für das erste Fördermittel beschrieben wurden. Dies hat den Vorteil, dass unabhängig von verschiedenen Anwendungsfällen, bei denen ein Klebstoff mit jeweils unterschiedlicher Dichte bereitgestellt werden muss, der Förderdruck aufrechterhalten oder bei Bedarf erhöht werden kann. Das zweite Fördermittel kann separat zuschaltbar sein. Die Steuer- und/oder Regeleinheit kann bspw. die Fördermenge und den Förderdruck abhängig von den Klebstoffparametern in-situ erfassen und über das zweite Fördermittel verändern, während dann vor der Erwärmung des Klebstoffs keine Parameteranpassungen durchgeführt werden müssen.

Gemäß einer weiter bevorzugten Ausführungsform weist die Dosiereinheit wenigstens ein zweites Heizmittel auf. Dies hat den Vorteil, dass vom zweiten Auslass bis zum Längsschlitz ein Temperaturgradient vermieden werden kann. Die zusätzliche Wärmeleistung kann zur Feineinstellung der Temperatur des Klebstoffs auf eine exakte Verarbeitungstemperatur genutzt werden. Gleichzeitig ist es möglich, die zusätzliche Wärmeleistung als Puffer zu nutzen, um nach einem Stillstand schnell Klebstoff bereitzustellen oder um größere Fördermengen an Klebstoff bereitstellen zu können. Das zweite Heizmittel kann aus den Ausführungen gewählt werden, wie sie für das erste Heizmittel vorstehend beschrieben wurden. Das zweite Heizmittel kann den dritten Förderkanal umgeben und bspw. mäander- oder spiralförmig in der Dosiereinheit angeordnet sein. Das zweite Heizmittel ist außerdem bevorzugt separat von dem ersten Heizmittel durch eine nachfolgend näher erläuterte Steuer- und Regeleinheit schaltbar bzw. steuer- und/oder regelbar.

Gemäß einer weiter bevorzugten Ausführungsform ist eine Steuer- und/oder Regeleinheit vorgesehen, durch die mindestens die Heizmittel steuer- und/oder regelbar sind, wobei bevorzugt wenigstens ein Temperaturfühler mit der Steuer- und/oder Regeleinheit zusammenwirkt. Dies hat den Vorteil, dass die gewünschte Bereitstellungstemperatur des Klebstoffs stets sichergestellt und geregelt werden kann, da zu geringe Temperaturen eine zu hohe Viskosität und damit Auftragungsschwierigkeiten mit sich bringen, bzw. zu hohe Temperaturen dem Klebstoff schaden können. Es kann zwischen Fördereinheit und Erwärmungseinheit, zwischen Erwärmungseinheit und Dosiereinheit und vor dem Auftragsauslass und in der Walze jeweils ein Temperaturfühler angeordnet sein. So können die Starttemperatur des zugeführten Klebstoffs, die Temperatur des erwärmten Klebstoffs und die Temperatur des Klebstoffs vor dem Auftrag auf die Walze bzw. auf das Werkstück als Parameter bekannt sein. Die Heizmittel sind bevorzugt unabhängig voneinander durch die Steuer- und/oder Regeleinheit schaltbar und/oder steuer- und/oder regelbar. Die Steuer- und Regeleinheit kann auch mit einer Vorsteuerung kombiniert werden. So kann die Menge an Klebstoff über die anliegende Förderleistung, bspw. über die Drehbewegung eines Schneckenförderers, berechnet werden und dann die notwendige Heizleistung erzeugt werden. Das Signal eines Temperaturfühlers kann dann zur Nachregelung genutzt werden. Außerdem sind bevorzugt bspw. die Förderleistung der Förderschnecke, die Länge und Breite des Längsschlitzes, der Abstand der Walze zum Längsschlitz der Dosiereinheit, sowie die Position der Rakel auch durch die Steuer- und/oder Regeleinheit veränderbar.

Gemäß einer weiter bevorzugten Ausführungsform weist die Dosiereinheit ein Mittel zur Längenverstellung des Längsschlitzes auf. Dies hat den Vorteil, dass die Abmessung der auf die Walze aufgetragenen Klebstoffschicht (die Breite der Klebstoffschicht) an die Abmessung des Werkstücks angepasst werden kann. Mündet der Längsschlitz mit mindestens einer Öffnung in der Oberfläche der Dosiereinheit, so kann in diese Öffnung dann jeweils bspw. ein Stift, ein Bolzen oder ein ähnliches Element justierbar, meist verschieblich, eingebracht werden. Dieses Element kann so den Längsschlitz teilweise oder vollständig von innen abdecken. Ein analoger Schiebermechanismus kann aber auch so angeordnet sein, dass der Längsschlitz bzw. dessen Öffnungen von außen verdeckt werden. Eine weitere Alternative stellt bspw. die Anordnung von an der Außenseite des Längsschlitzes angeordneten Abdeckklappen dar. Der Mechanismus zur Längenverstellung kann steuer- und/oder regelbar sein und mit der Steuer- und/oder Regeleinheit zusammenwirken.

Gemäß einer weiter bevorzugten Ausführungsform ist der Walze ein Mittel zum Vergleichmäßigen einer auf der Walze abgelegten Klebstoffschicht zugeordnet, bevorzugt zwischen dem Längsschlitz und der Stelle, an der der Klebstoff von der Walze auf das Werkstück übertragen wird. Das Mittel zur Vergleichmäßigung des Klebstoffs kann als Rakel, Abstreifer oder als eine zweite Walze ausgebildet sein, auf die der Klebstoff z. B. übertragen wird. Dies hat den Vorteil, dass die vom Längsschlitz auf die Walze aufgebrachte Klebstoffschicht eine gleichmäßige Dicke über den Umfang der Walze aufweist. Es kann z.B. die Dicke der Klebstoffschicht über die Walzenbreite homogen sein, es kann aber auch ein Gradient der Dicke vorliegen. Es ist auch möglich, dass der Klebstoff in einem Muster auf der Walze abgelegt wird. Bevorzugt ist unter Zuhilfenahme der Rakel oder eines alternativen Mittels zum Vergleichmäßigen des Klebstoffs die Schichtdicke aber an wenigstens annähernd jeder Position in Längsrichtung über den Umfang der Walze wenigstens annähernd konstant. Generell kann aber jedes in Kontakt mit dem auf der Walze rotierenden Klebstoff bringbare Werkzeug ausreichender Steifigkeit ein Mittel zum Vergleichmäßigen darstellen, welches ab einer justierbaren Höhe, bevorzugt über die annähernd vollständige Walzenbreite, keinen Klebstoff passieren lässt, womit sich nach dem Hindernis eine Klebstoffschicht mit einer gewünschten Dicke ergibt.

Gemäß einer weiter bevorzugten Ausführungsform sind die Fördermittel bevorzugt jeweils als Schnecke oder Extruder ausgebildet. Dies hat den Vorteil, dass eine kontinuierliche Förderung eines Feststoffs und/oder einer viskosen Masse, unter Ausnutzen der Reibungsförderung, mit dem Aufprägen eines Drucks möglich ist. Ein alternativer Extruder kann bspw. ein Kolbenextruder, ein Doppelschneckenextruder oder auch ein Planetwalzenextruder sein. Es kann vorteilhaft sein, die Oberflächen des Fördermittels zu beschichten, so dass, insbesondere im Stillstand, Anbackungen, Verklebungen und andere Kleberückstände vermieden werden. Eine Beschichtung kann entsprechend auch für andere Oberflächen in Betracht fallen, welche, unabhängig vom Aggregatzustand, mit dem Klebstoff in unmittelbaren Kontakt treten.

Die erfindungsgemäße Vorrichtung ist in der Regel aus Metall gefertigt. Es kann aber jeder Werkstoff eingesetzt werden, der den Verarbeitungsbedingungen des jeweils eingesetzten Klebstoffs, insbesondere den Temperaturen, die für die Bereitstellung des Klebstoffs erforderlich sind, standhält und der gegenüber dem Klebstoff inert ist. Alternativ können z. B. Glas, Keramik oder wärmebeständige Kunststoffe eingesetzt werden.

Gemäß einer weiter bevorzugten Ausführungsform ist die Vorrichtung zum Bereitstellen von Klebstoff für die Verarbeitung und/oder Bereitstellung von thermoplastischem Schmelzkleber, bevorzugt in der Form von Klebstoffblöcken oder -granulat, ausgelegt. Es können sämtliche thermoplastischen Klebstoffe verarbeitet werden, insbesondere Polyurethan (PUR). PUR weist herausragende Beständigkeit gegen Wärme, Wasser und Lösungsmittel auf. Dementsprechend ist PUR für verschiedenste Anwendungsbereiche interessant und setzt sich gegen alternative Klebstoffe ab. PUR kann bspw. in den Darreichungsformen thermoplastisches PUR (TPU) oder reaktives PUR (z. B. Purmelt) genutzt werden, wobei es auch als Duroplast vorkommen kann. Alternative Klebstoffe können bspw. Ethylenvinylacetat (EVA), Polyamid (PA), Polyolefin (PO) oder Leime sein. Die Vorrichtung zum Bereitstellen von Klebstoff kann so konzipiert sein, dass das PUR erst mit dem Austreten aus dem Längsschlitz erstmalig mit Sauerstoff und/oder Feuchtigkeit, bspw. in Form von Luftfeuchtigkeit, in Kontakt kommt.

Erfindungsgemäß ist der Dosiereinheit eine neue und aus dem Stand der Technik nicht nahegelegte Vorrichtung zum Auftragen einer eingefärbten Substanz auf die Randbereiche, in Rotationsrichtung gesehen also angrenzend an die Klebstoffschicht zugeordnet. Die Vorrichtung zum Auftragen einer eingefärbten Substanz kann mit beliebigen, auch mit aus dem Stand der Technik bekannten Dosier- oder Auftragseinheiten für Klebstoff eingesetzt werden. Die eingefärbte Substanz kann Farbpigmente und/oder Farbpigmentzubereitungen bzw. Farbstoffe aufweisen, aber auch Bindemittel, Klebstoff und/oder Additive, die z. B. ein Anhaften am Werkstück und/oder an der Klebstoffschicht verbessern, können der eingefärbten Substanz zugesetzt sein. Dies hat den Vorteil, dass optische Anpassungen der Klebefuge an Farbe und/oder Muster des Werkstücks möglich sind, eine mögliche Klebefuge entsprechend kaschiert wird und gleichzeitig zum einen die Kosten für teure Farbpigmente geringgehalten werden und zum anderen die Eigenschaften des bereitgestellten Klebstoffs unbeeinflusst sind, da nicht die vollständige Klebstoffschicht eingefärbt werden muss. Außerdem kann die eingefärbte Substanz schmutzabweisend, also nicht adhäsiv gegenüber Fremdkörpern, wasserabweisend, antibakteriell oder antistatisch sein. Die Randbereiche können bevorzugt die beiden über die Länge der Walze gesehenen Enden der aufgetragenen Klebstoffschicht umfassen. Das Ausmaß der aufgetragenen Substanz ist bevorzugt einstellbar.

Das Mittel zum Auftragen der eingefärbten Substanz kann bspw. der Dosiereinheit zugeordnet sein und bspw. ein Reservoir für Farbe, Färbemittel, Pigmente und/oder die eingefärbte Substanz, eine Zuleitung und einen Farbauslass umfassen. Es ist jedoch auch möglich, dass dieses Mittel der Vorrichtung zum Bereitstellen von Klebstoff vor- oder nachgelagert ist. Das Reservoir kann eine Mischstation für Farben umfassen, so dass bspw. ein Vorrat an Grundfarben vorhanden ist und eine bevorzugte Auftragsfarbe stets frisch angemischt wird. Eine eingefärbte Substanz kann bspw. nur dekorative Zwecke erfüllen. Es kann aber auch möglich sein, dass diese Substanz ein eingefärbter zweiter Klebstoff ist, welcher nicht unbedingt derselben Art sein muss wie der bereitgestellte Klebstoff.

Das erfindungsgemäße Verfahren zum Bereitstellen von Klebstoff wird unter Einsatz einer wie vorstehend beschriebenen Vorrichtung umgesetzt, wobei ein zumindest teilweise als Feststoff vorliegender Klebstoff in einer Fördereinheit unter einen Förderdruck gesetzt und in eine Erwärmungseinheit gefördert wird, in der der Klebstoff unter Einwirkung von Wärme erweicht und/oder verflüssigt wird und in eine Dosiereinheit gefördert wird, wobei der erwärmte und/oder verflüssigte Klebstoff durch einen Längsschlitz austritt und auf einer Walze abgelegt wird. Das erfindungsgemäße Verfahren umfasst sämtliche Varianten der Bereitstellung von Klebstoff, die im Zusammenhang mit der Nutzung der vorstehend beschriebenen Vorrichtung zum Bereitstellen von Klebstoff beschrieben sind.

Das erfindungsgemäße Verfahren zum Bereitstellen von Klebstoff weist sich gegenüber bekannten Verfahren durch eine hohe Kosteneffizienz und eine saubere und einfache Verfahrensweise aus. Durch die Vermeidung von Klebstoffbecken oder andere Puffer im Zuge der Bereitstellung, insbesondere nach einer Erweichung und/oder Verflüssigung durch Erwärmung, wird eine hohe Ausnutzung des Klebepotentials des Klebstoffs sichergestellt und Reinigungsaufwand vermieden. Gleichzeitig spart dies deutliche Energiekosten, da bspw. kein Vorrat an Klebstoff unter Zufuhr von Wärme in einem Klebstoffbecken im verflüssigten Zustand gehalten werden muss. Die Bereitstellung des Klebstoffs erfolgt außerdem in einer wenigstens annähernd sauerstofffreien Atmosphäre, was der Qualität des bereitgestellten Klebstoffs zu Gute kommt. Außerdem ist der Umgang mit dem Klebstoff nachhaltiger als bei herkömmlichen Verfahren, da kaum Verluste auftreten und nur so viel Klebstoff bereitgestellt wird, wie verbraucht wird, da nicht batchweise gearbeitet wird.

Details der Erfindung werden nachfolgend anhand von Ausführungsbeispielen näher erläutert. Es zeigen:
Fig. 1 Eine schematische Darstellung einer beispielhaften Ausführungsform der erfindungsgemäßen Vorrichtung zum Bereitstellen von Klebstoff in Seitenansicht;
Fig. 2 Eine schematische Darstellung der Fördereinheit aus Fig. 1 im Querschnitt;
Fig. 3 Eine schematische Darstellung einer beispielhaften Ausführungsform der Erwärmungseinheit in Seitenansicht;
Fig. 4 Eine schematische Darstellung einer beispielhaften Ausführungsform der Dosiereinheit mit zugeordneter Rakel im Schnitt quer zu der Rotationsachse der Walze;
Fig. 5a Eine fokussierte schematische Darstellung einer beispielhaften Ausführungsform des Längsschlitzes in der Dosiereinheit;
Fig. 5b Eine schematische Darstellung einer alternativen Ausführungsform des Längsschlitzes in Frontansicht;
Fig. 5c Eine schematische Darstellung einer alternativen Ausführungsform zur Längenverstellung des Längsschlitzes in Frontansicht;
Fig. 6 Eine schematische Frontansicht einer beispielhaften Ausführungsform der erfindungsgemäßen Vorrichtung zum Bereitstellen von Klebstoff, mit einem Mittel zum Auftragen einer eingefärbten Substanz und/oder Färbemittel;
Fig. 7 Eine schematische Explosionsdarstellung einer Walze;
Fig. 8 Eine schematische Darstellung einer Walze mit Scharnier und Arretierung;
Fig. 9 Eine schematische Darstellung einer Dosiereinheit mit abgeklappter Walze.

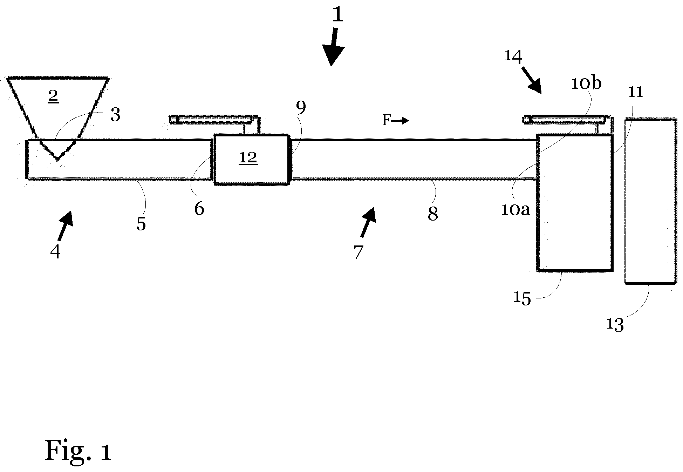

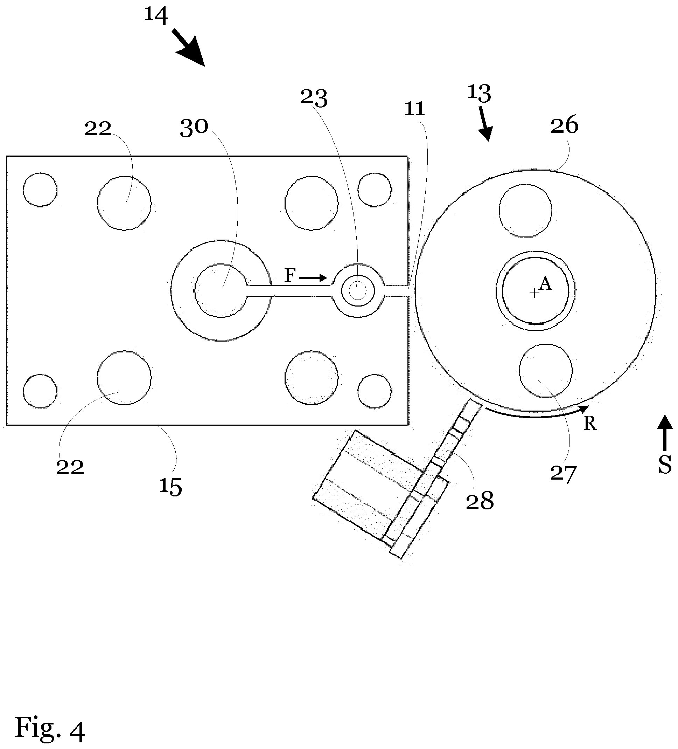

Fig. 1 zeigt eine Vorrichtung zum Bereitstellen von Klebstoff 1. Diese umfasst eine Fördereinheit 4, eine Erwärmungseinheit 7 und eine Dosiereinheit 14. Die Fördereinheit 4 ist von einem rohrförmigen ersten Gehäuse 5 umgeben, die Erwärmungseinheit 7 von einem rohrförmigen zweiten Gehäuse 8 und die Dosiereinheit 14 von einem blockförmigen dritten Gehäuse 15. Die rohrförmigen Gehäuse 5, 8 sind aus einem rostfreien und innen mit einem anti-adhäsiven Mittel beschichteten temperaturfesten Stahl gefertigt, das blockförmige Gehäuse 15 wurde aus Aluminium gefertigt. Die Gehäuse 5, 8, 15 können alternativ nach Bedarf aus Stahl, Aluminium, Kupfer, einem temperaturfesten Kunststoff, Keramik oder einem glasartigen Werkstoff gefertigt werden. Zwischen den Einheiten 4, 7 und 14 befindet sich jeweils ein Kugelhahn 12, welcher diese Einheiten in geöffneter Stellung miteinander luft- und gasdicht verbindet und welcher sie in geschlossener Stellung voneinander trennt. Der Fördereinheit 4 ist darüber hinaus ein trichterförmiger Vorratsbehälter 2 zugeordnet, in welchem sich partikelförmiges PUR befindet. Alternativ zu PUR kann auch jeder andere thermoplastische Klebstoff benutzt werden. Der Vorratsbehälter 2 ist aus Aluminium gefertigt und reagiert nicht mit dem PUR. Außerdem sorgt der Vorratsbehälter 2 für eine kontinuierliche Zufuhr an neuem PUR zur Fördereinheit 4. Das PUR bewegt sich aus dem Vorratsbehälter 2 durch die Schwerkraft nach unten durch einen ersten Einlass 3 zur Fördereinheit 4, wo das PUR von einem Schneckenförderer erfasst und bis zu einem ersten Auslass 6 in Richtung der Förderrichtung F gefördert wird. Der Schneckenförderer prägt dem PUR einen Förderdruck von ca. 30 bar auf, so dass der Klebstoff durch einen Kugelhahn 12 und durch einen zweiten Einlass 9 in die Erwärmungseinheit 7 gedrückt wird. Alternativ können Förderdrücke zwischen 0,1 bar und 100 bar realisiert werden. In der Erwärmungseinheit 7 wird dem PUR Energie in Form von Wärme zugeführt, wodurch das PUR bis zu einer für die Bereitstellung geeigneten Viskosität erweicht bzw. verflüssigt wird. Die Erwärmungseinheit 7 weist im Inneren ein hier nicht dargestelltes zweites Fördermittel auf. So kann der Förderdruck nach der Änderung der Viskosität des PUR aufrechterhalten werden. Durch den zweiten Auslass 10a gelangt das erwärmte PUR durch den Dosiereinlass 10b in die Dosiereinheit 14. Fig. 4 beschreibt die Eigenschaften der Dosiereinheit 14. Das PUR wird bis zu einem Längsschlitz 11 gedrückt und tritt dort zum ersten Mal mit der die Vorrichtung umgebenden Atmosphäre in Kontakt. Das PUR wird dann direkt auf einer rotierenden Walze 13 abgelegt. Die Bauteile der Vorrichtung nach Fig. 1 sind innen mit einem anti-adhäsiven und chemisch hoch selektiven Mittel beschichtet.

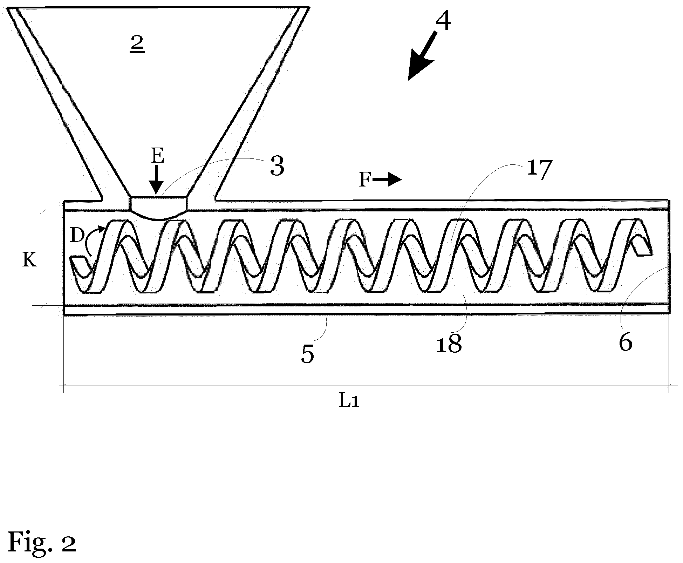

Fig. 2 zeigt die Fördereinheit 4 der Vorrichtung aus Fig. 1 mit dem trichterförmigen Vorratsbehälter 2 in einem Schnitt entlang einer Achse parallel zur Förderrichtung. Das rohrförmige Gehäuse 5 bildet einen rohrförmigen ersten Förderkanal 18 mit einem Durchmesser K, der bemessen ist zur Aufnahme eines Schneckenförderers 17 mit einer Förderleistung, die genügt, um eine gewünschte Fördermenge an PUR zu bewegen. Die Förderleistung liegt bei circa 5 kg/h, wobei bevorzugt Förderleistungen zwischen 0,5 kg/h und 50 kg/h gefahren werden. Der Schneckenförderer 17 hat eine Drehrichtung D, so dass das PUR in Förderrichtung F gefördert wird. Das partikelförmige PUR tritt in Eintrittsrichtung E durch den ersten Einlass 3 in den ersten Förderkanal ein und wird durch die vollständige Länge L1 der Fördereinheit bis zum ersten Auslass 6 gefördert. Alternativ kann anstelle eines Schneckenförderers ein Extruder eingesetzt werden, welcher noch besser für den Aufbau hoher Förderdrücke geeignet ist. Der Förderdruck liegt bei ca. 5 bar, wobei bevorzugte Förderdrücke zwischen 0,1 bar und 50 bar liegen, besonders bevorzugt zwischen 1 bar und 30 bar, ganz besonders bevorzugt zwischen 2 bar und 8 bar.

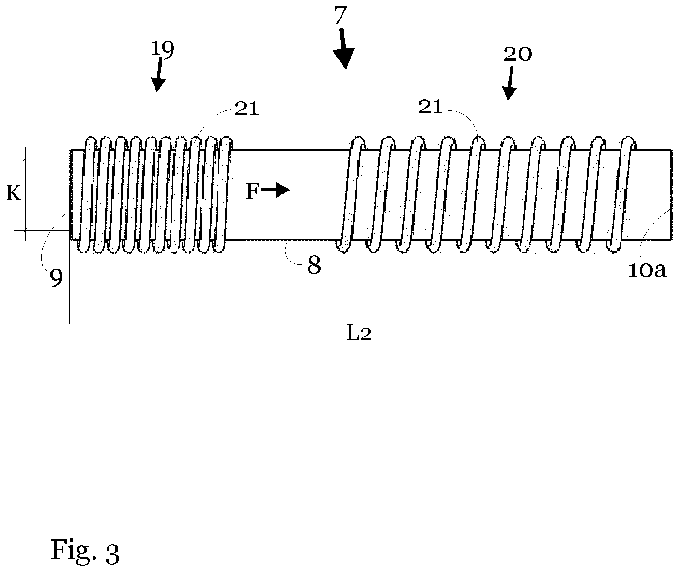

Fig. 3 zeigt eine Außenansicht der Erwärmungseinheit 7. Das rohrförmige Gehäuse 8 bildet im Inneren einen hier nicht dargestellten zweiten Förderkanal mit dem Kanaldurchmesser K und der Länge L2. Um das Gehäuse 8 sind hier zwei separate Heizspiralen 19, 20 angeordnet. Die Heizspiralen 19, 20 bestehen jeweils aus einer durchgehenden Heizleitung 21, welche als Widerstandsdraht aus einer Eisen-Chrom-Aluminiumlegierung gefertigt und elektrisch durchströmt werden. Die Heizspiralen 19, 20 funktionieren entsprechend als Widerstandsheizungen. Das PUR wird in der Erwärmungseinheit 7 unter dem Förderdruck und durch die zweite Förderleistung eines hier nicht gezeigten, im Inneren der Erwärmungseinheit 7 befindlichen, zweiten Fördermittels von einem zweiten Einlass 9 zu einem zweiten Auslass 10a entlang der Förderrichtung F gefördert. Die erste Heizspirale 19 weist eine engere Wicklung auf als die zweite Heizspirale 20. Dementsprechend ist der Eintrag an Wärmeenergie in das PUR am Anfang örtlich größer. Das PUR kommt in festem und kühlem Zustand an, daher begünstigt ein hoher Temperaturgradient eine effiziente und schnelle Erwärmung. Die Heizspiralen 19, 20 sind separat von einer hier nicht dargestellten Regeleinheit regelbar, so dass die zweite Heizspirale 20 mit der weiteren Wicklung über einen längeren Weg und Zeitraum das PUR bis annähernd zu einer exakten Soll-Verarbeitungstemperatur feinjustieren kann. Die Heizspiralen 19, 20 erwärmen das PUR bis ca. 140°C, wobei alternativ Verarbeitungstemperaturen zwischen 15°C und 250°C exakt erzeugt werden können.

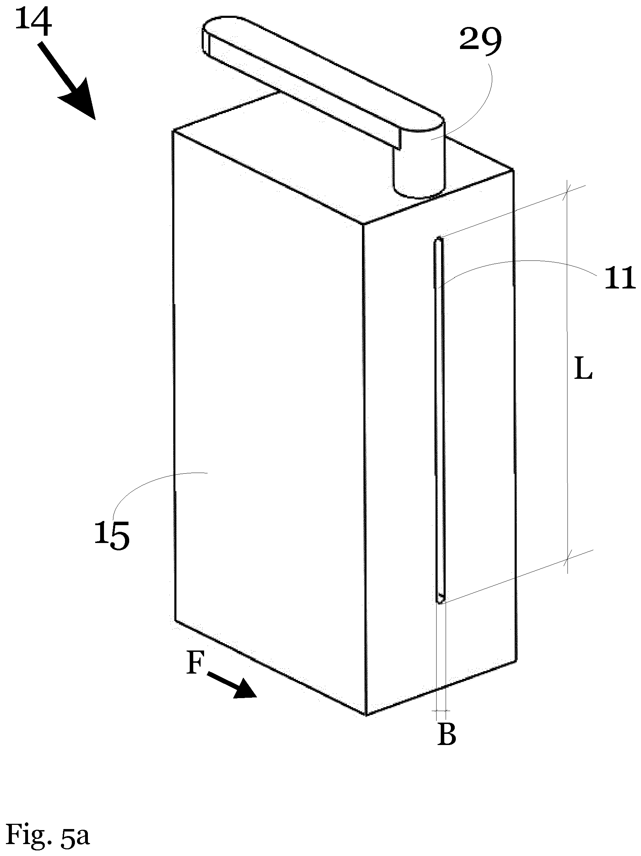

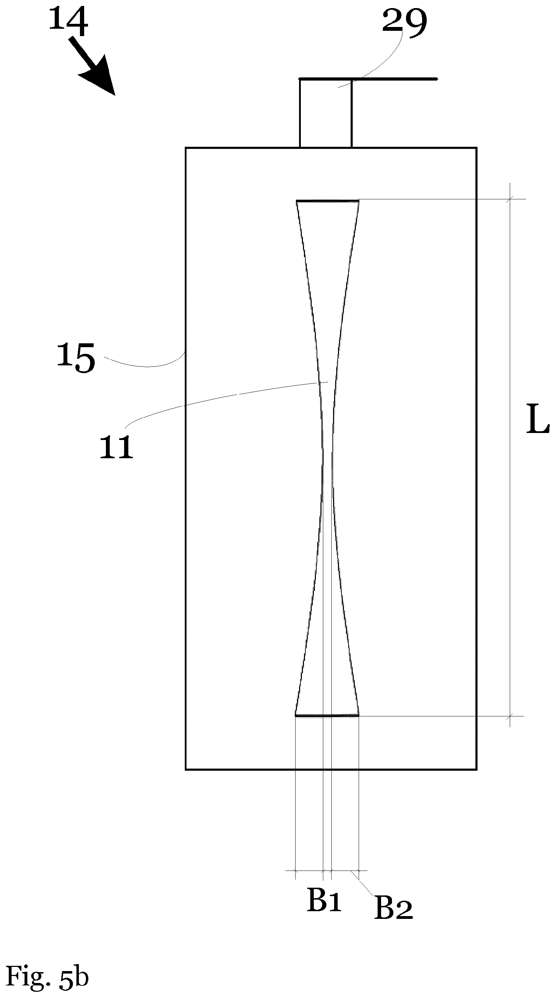

Fig. 4 zeigt die Dosiereinheit 14 der erfindungsgemäßen Vorrichtung mit einer dazugehörigen Walze 13, auf welche aus dem Längsschlitz 11 das PUR auf der Walzenoberfläche 26 abgelegt wird. Die Walze 13 rotiert um die Rotationsachse A in Rotationsrichtung R, wobei die Walze 13 durch einen hier nicht dargestellten Elektromotor rotatorisch angetrieben wird. Der Längsschlitz 11 ist beispielhaft gemäß Fig. 5a als streifenförmige Aussparung in der der Walze 13 zugewandten Seite der Dosiereinheit ausgebildet. Alternativ zeigt Fig. 5b eine bikonkave Gestaltung des Längsschlitzes, so dass zum Sparen von Klebstoff in der Mitte des Längsschlitzes 11 weniger PUR abgelegt wird, als an den Randbereichen. Dabei weist der Längsschlitz an den Randbereichen eine maximale Breite B2 und in der Mitte eine minimale Breite B1 auf. Das PUR tritt durch den hier nicht dargestellten Dosiereinlass 10b in die Dosiereinheit 14 ein. Der Dosiereinlass 10b liegt hier hinter der Bildebene, ebenso wie ein rohrförmiger dritter Förderkanal der in der Verteilkammer 30 mündet. Die Verteilkammer 30 ist eine Bohrung im blockartigen Gehäuse 15, welche den Querschnitt des dritten Förderkanals bis auf den des Längsschlitzes 11 aufweitet. Der Verlauf des dritten Förderkanals ist mäanderförmig, so dass das PUR eine längere Verweilzeit in dem von Heizkanälen 22 durchzogenen blockartigen Gehäuse 15 hat. Die durch die Heizkanäle 22 eingebrachte Energie in Form von Wärme sorgt für die exakte Feinjustierung der Bereitstellungstemperatur des PUR, welche bei ca. 150°C liegt. Die Bereitstellungstemperatur soll von dem PUR erreicht werden bevor es letztendlich aus dem Längsschlitz 11 gedrückt und auf der Walzenoberfläche 26 abgelegt wird.

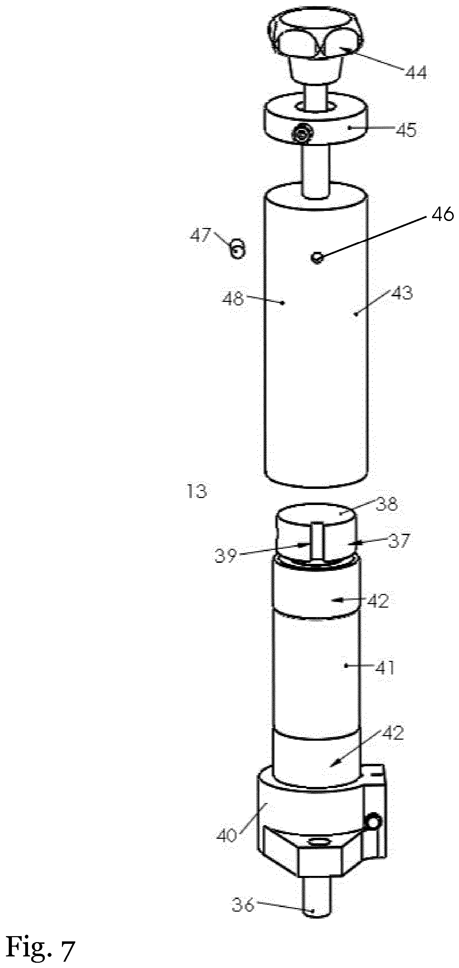

Dem Längsschlitz 11 ist eine Längenverstellung 23 vorgelagert. Diese ist eine durchgehende Bohrung, in die von einer oder von beiden Seiten ein Verstellglied eingebracht werden kann und somit das PUR auf die unverschlossenen Bereiche des Längsschlitzes 11 gelenkt werden kann, anstatt diesen voll mit PUR zu beaufschlagen. Ein Verstellglied ist hier nicht näher dargestellt, kann aber z.B. ein Bolzen oder ein Stift aus diversem möglichst gering adhäsivem Material sein. Die Walze 13 ist ein zylindrischer Körper mit zwei durch die Länge der Walze 13 beabstandeten Endflächen. Ein möglicher Aufbau der Walze 13 wird in Fig. 7 näher erläutert. Die Walze ist aus einem Stück Aluminium gefertigt, wobei die Oberfläche ein reliefartiges Muster (hier nicht dargestellt) aufweist. Die Walze 13 weist eine Walzenheizung 27 auf. Diese werden so von Thermoöl durchströmt, dass die Temperatur des PUR auf der Walze 13 konstant gehalten wird. Die Walzenheizung 27 kann in einer bevorzugten Ausführungsform als Heizkanal oder durch elektrisch beheizte Heizstäbe realisiert werden. Analog können auch die Heizkanäle 22 durch elektrisch beheizte Heizstäbe ersetzt werden. Diese sorgen dafür, dass die exakte Verarbeitungstemperatur des PUR am Längsschlitz 11 erreicht wird. Entsprechend ist die Temperatur der Heizkanäle 22 und der Walzenheizung 27 auf einen Soll-Wert regelbar.

Eine der Walze 13 zugeordnete Rakel 28 sorgt dafür, dass das auf der Walzenoberfläche 26 abgelegte PUR eine, über den Umfang der Walze gesehen, homogene Dicke hat, bevor das PUR auf ein aus der Schubrichtung S herangeführtes Werkstück aufgetragen wird. Die Rakel ist aus Aluminium gefertigt. Der Werkstoff ist relativ günstig, leicht, chemisch selektiv und weist neben einer guten spanenden Bearbeitbarkeit auch eine hohe Festigkeit auf.

Fig. 5a illustriert vor allem die Gestaltung des Längsschlitzes 11. Die Länge L des Längsschlitzes ist gegenüber seiner Breite B im Verhältnis 20:1 größer. Bevorzugt liegt ein solches Verhältnis zwischen 5:1 und 100:1, besonders bevorzugt 15:1 bis 60:1. Entsprechend ist der Längsschlitz 11 stets langgestreckt, z.B. wie hier streifenförmig. Die Breite B ist über einen Stellhahn 29 verstellbar, bzw. der Längsschlitz 11 in Endstellung des Stellhahns 29 abschließbar. Der Stellhahn 29 weist z.B. zwei Stellpositionen auf, so dass die Schlitzweite diskontinuierlich zwischen schmal und breit gewählt und damit u.a. der PUR-Durchfluss geregelt werden kann. Es wird für einen schmalen Längsschlitz 11 einfach durch eine Blende ein Teil der maximalen Schlitzweite abgedeckt. In alternativen Ausführungsformen kann ein Stellhahn 29 mit kontinuierlich verstellbaren Stellpositionen ausgelegt werden, welche ebenso verschiedene Schlitzweiten ansteuern können.

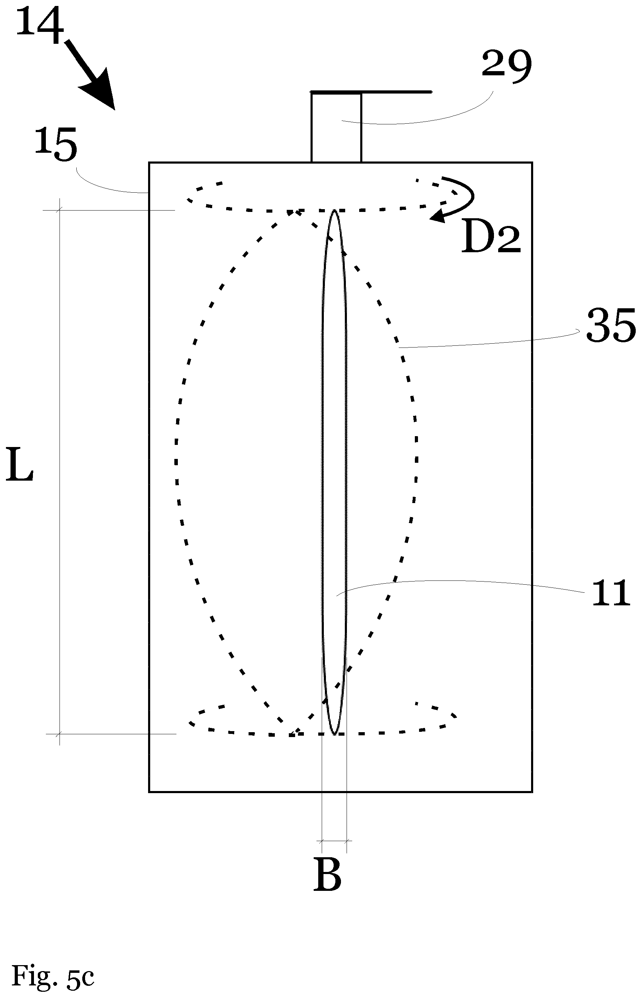

In einer weiteren alternativen Ausführungsform gem. Fig. 5c wird der Stellhahn 29 benutzt, um eine alternative Möglichkeit zur Längenverstellung zu bieten. Die Verstellung erfolgt dabei nicht mittels von den Enden einfahrbarer Verstellglieder (vgl. Fig. 4), sondern mittels einer in Drehrichtung D2 eindrehbaren Blende 35, wobei die Blende 35 eine (bi-)konvexe Gestaltung hat. So wird der Längsschlitz 11 zuerst an den Randbereichen verdeckt und mit vermehrter Eindrehung der Blende in der Endstellung auch bis zur Mitte von innen verdeckt. Das Prinzip kann bspw. auch durch einen Kugelhahn mit ovaler Durchflussbohrung realisiert werden. In einer alternativen Ausführungsform kann die Längenverstellung 23 auch mit einer konkaven Blende ausgebildet sein und somit den Längsschlitz 11 mit vermehrter Eindrehung sukzessive von der Mitte zu den Randbereichen verdecken.

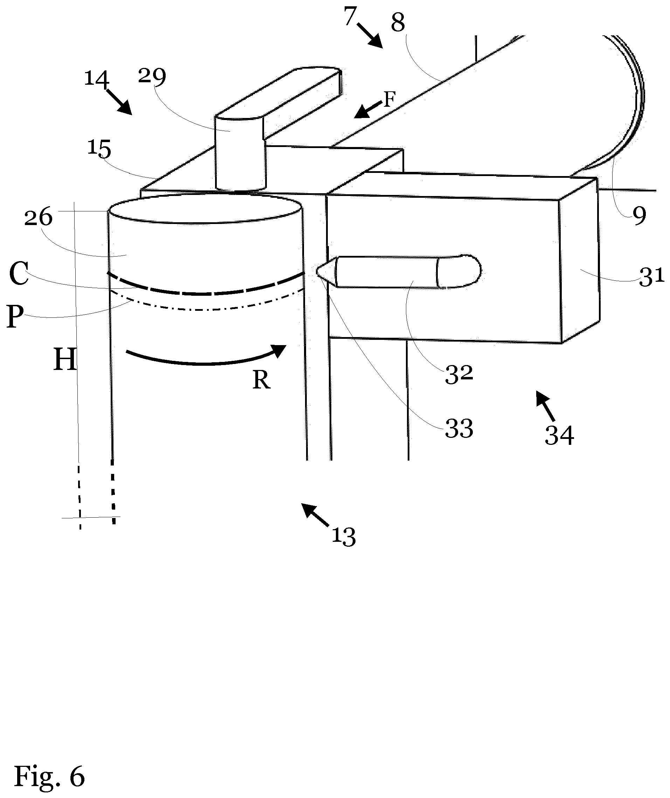

Fig. 6 zeigt eine erfindungsgemäße Vorrichtung zum Bereitstellen von Klebstoff mit einer Färbevorrichtung 34 zum Aufbringen einer eingefärbten Substanz auf die Walze 13. Alternativ kann auch ein Bindemittel oder ein zweiter Klebstoff so aufgetragen werden. Die Färbevorrichtung 34 besteht aus einem Mischreservoir 31, einer Zuleitung 32 und einem Farbauslass 33. Das Mischreservoir 31 beinhaltet mehrere separate Reservoirs von Grundfarben und ein ansteuerbares Mittel zum Mischen dieser Grundfarben zu einer Wunschauftragsfarbe. Die Bauteile der Färbevorrichtung 34 sind aus Aluminium gefertigt und hier so angeordnet, dass der Farbauftrag in Einheit mit der Bereitstellung des Klebstoffs direkt an der Walze 13 vorgenommen werden kann. Der Farbauftrag C erfolgt an den Randbereichen P der auf der Walzenoberfläche 26 abgelegten PUR-Schicht. Der sich gemäß Fig. 6 ergebende Abstand zwischen dem Farbauftrag C und dem Randbereich P der PUR-Schicht ist rein illustrativ. In der Praxis ist sogar eine Berührung möglich. Fig. 6 illustriert außerdem, dass die PUR-Schicht je nach Längenverstellung am Längsschlitz (hier nicht dargestellt) auch nur über Anteile der Höhe H der Walze erfolgen kann.

Fig. 7 zeigt einen Aufbau der Walze 13, wobei vorstehend erwähnte Heizelemente, die die Walze 13 aufweisen kann, der Übersichtlichkeit halber nicht dargestellt sind. Eine Welle 36 erstreckt sich von einem hier nicht dargestellten Antrieb bis zu einem Mitnehmer 37, der auf das freie, nicht im Antrieb eingespannte Ende 38 der Welle 36 aufgesetzt ist. Die Welle 36 -und damit die Walze 13- erstreckt sich in der Regel senkrecht nach oben, da das zu beschichtende Werkstück (nicht dargestellt) seitlich an der Walze 13 vorbeigeführt wird. Der Mitnehmer 37 ist mit einer Nut 39 versehen. Die Welle 36 ist nahe dem Antrieb von einer Halterung 40 umschlossen. Die Halterung 40 kann mit einem Oberteil eines hier nicht dargestellten Scharniers versehen sein. Auf der Halterung 40 ist die Führung 41 aufgesetzt, die im Betrieb nicht mit der Welle 36 rotiert. Die Führung 41 ist als Hülse ausgebildet, die konzentrisch zur Welle 36 und diese umschließend angeordnet ist. Die Führung 41 erstreckt sich im Wesentlichen von der Halterung 40 bis zum Mitnehmer 37. Auf der Außenseite der Führung ist mindestens ein Gleitlager 42 angebracht; in Fig. 7 ist die bevorzugte Anordnung mit zwei Gleitlagern 42 dargestellt, wobei ein erstes Gleitlager 42 nahe der Halterung 40 angeordnet ist und ein zweites Gleitlager 42 nahe dem freien Ende 38 der Welle 36 angebracht ist.

Eine Walzenhülle 43, deren Innendurchmesser so bemessen ist, dass die Walzenhülle über die Führung 41 geschoben werden kann, ist ebenfalls in Fig. 7 gezeigt. An der Walzenhülle 43 ist ein Griff 44 und ein optional an der Dosiereinheit 14 (hier nicht dargestellt) zu befestigendes Lager 45, hier als Kugellager ausgebildet. Zum Reinigen der Vorrichtung oder beim Wechsel eines Klebers oder beim Wechsel des zu beschichtenden Werkstücks kann ein Wechsel der Walze erforderlich sein. Im vorliegenden Fall muss lediglich die Walzenhülle 43 abgezogen und eine neue Walzenhülle 43 aufgesetzt werden. Die übrigen Bauteile der Walze 13 können in der Vorrichtung verbleiben. Ein Ausbau der gesamten Walze 13 wird so vermieden. Es liegt auf der Hand, dass diese Ausführung besonders wartungsfreundlich ist, denn es ist allein die Walzenhülle 43 bzw. deren Außenfläche zu reinigen, ohne dass auf die Führung 41 oder die Welle 36 bzw. den Antrieb Rücksicht genommen werden muss. Zudem wird nur ein Antrieb, eine Welle 36 und eine Führung 41 benötigt. Es müssen lediglich mehrere Walzenhüllen 43 vorgehalten werden, was diese Ausführung im Betrieb preiswert und effizient gestaltet.

Die Walzenhülle 43 weist eine Öffnung 46 auf, die von einer Stellschraube 47 durchsetzt wird. Die Stellschraube 47 steht im Betrieb mit der Nut 39 im Eingriff und bewirkt, dass die Welle 36 die Walzenhülle 43 mit in Rotation versetzt. Die äußere Oberfläche 48 der rotierenden Walzenhülle 43 nimmt den Klebstoff aus der Dosiereinheit 14 auf und überträgt ihn anschließend innerhalb einer Strecke, die kürzer als eine Umdrehung der Walze 13 ist, auf die Schmalfläche des zu beschichtenden Werkstücks (hier nicht dargestellt).

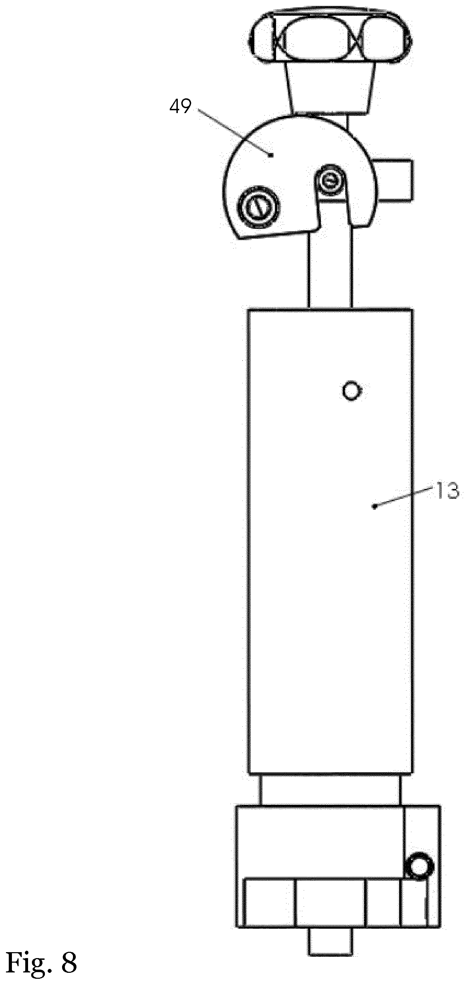

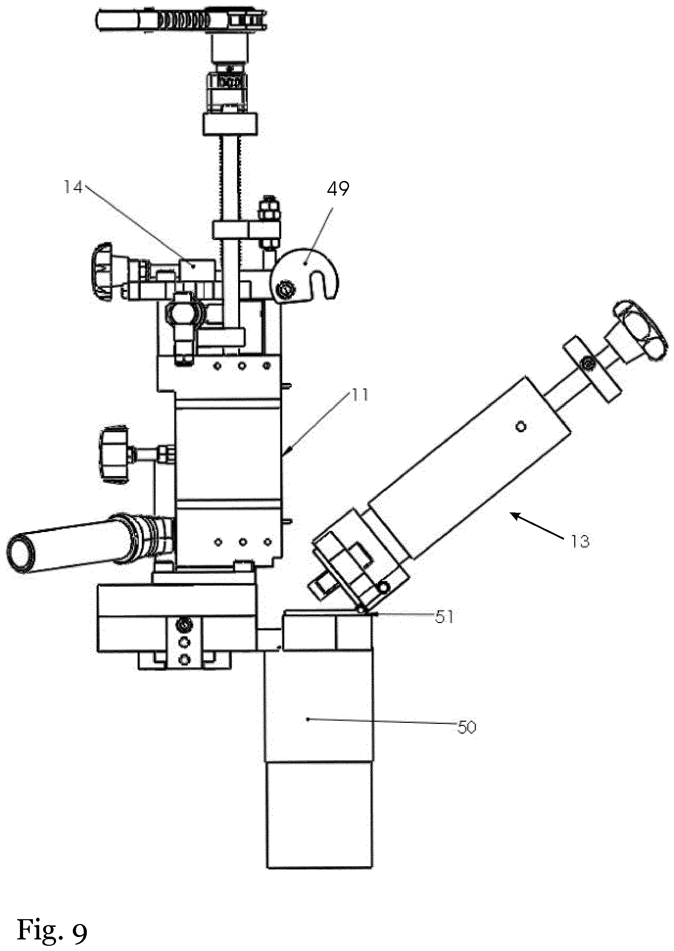

Fig. 8 zeigt eine Walze 13 gemäß Fig. 7, die an ihrem Griff 44 eine an der Dosiereinheit 14 (hier nicht dargestellt) angebrachte Arretierung 49 aufweist. Die Arretierung ist als einfacher Haken ausgebildet, der über einen Vorsprung gelegt wird, der am Griff 44 der Walze 13 angebracht wird. Fig. 9 zeigt die Dosiereinheit 14 mit daran angebrachter Walze 13. Der Antrieb 50 der Walze 13 ist an der Dosiereinheit 14 fixiert. Zwischen Antrieb 50 und Walze 13 ist ein Mittel zum Klappen bzw. Verschwenken der Walze 13 angeordnet, hier ausgeführt als Scharnier 51. Das Scharnier 51 ermöglicht das Abklappen bzw. Verschwenken der Walze 13 bezogen auf die Dosiereinheit 14, wenn die Arretierung 49 geöffnet ist. Der Längsschlitz 11 der Dosiereinheit 14 ist bei abgeklappter bzw. geschwenkter Walze 13 frei zugänglich, z. B. für Reinigungsarbeiten oder zum Verschließen des Längsschlitzes 11. Alternativ kann die Walze 13, ggf. auch mit dem Antrieb 50, auch linear verschiebbar ausgestattet sein, z. B. vertikal verschiebbar. Nach einer weiteren Ausführung kann die Walze 13 auch für eine kombinierte Bewegung, z. B. erst ein Verschieben, dann ein Klappen oder Verschwenken ausgelegt sein.

**Bezugszeichenliste**

| | | | |
|---|---|---|---|
| 1 | Vorrichtung zum Bereitstellen von Klebstoff | 33 | Farbauslass |
| 2 | Vorratsbehälter | 34 | Färbevorrichtung |
| 3 | erster Einlass | 35 | eindrehbare Blende |
| 4 | Fördereinheit | 36 | Welle |
| 5 | erstes Gehäuse | 37 | Mitnehmer |
| 6 | erster Auslass | 38 | freies Ende der Welle |
| 7 | Erwärmungseinheit | 39 | Nut |
| 8 | zweites Gehäuse | 40 | Halterung |
| 9 | zweiter Einlass | 41 | Führung |
| 10a | zweiter Auslass | 42 | Gleitfläche |
| 10b | Dosiereinlass | 43 | Walzenhülle |
| 11 | Längsschlitz | 44 | Griff |
| 12 | Kugelhahn | 45 | Lager |
| 13 | Walze | 46 | Öffnung |
| 14 | Dosiereinheit | 47 | Stellschraube |
| 15 | drittes Gehäuse | 48 | äußere Oberfläche |
| 17 | Schneckenförderer | 49 | Arretierung |
| 18 | erster Förderkanal | 50 | Antrieb |
| 19 | erste Heizspirale | 51 | Scharnier |
| 20 | zweite Heizspirale | A | Rotationsachse |
| 21 | Heizleitung | B | Breite |
| 22 | Heizkanal | B1 | minimale Breite |
| 23 | Längenverstellung | B2 | maximale Breite |
| 26 | Walzenoberfläche | C | arbauftrag |
| 27 | Walzenheizung | D | Drehrichtung einer Förderschne-cke |
| 28 | Rakel | | |
| 29 | Stellhahn | D2 | Drehrichtung einer ovalen Blende |
| 30 | Verteilkammer | E | Eintrittsrichtung |
| 31 | Mischreservoir | F | Förderrichtung |
| 32 | Zuleitung | K | Kanaldurchmesser |
| | | L | Länge |
| L1 | Länge der Fördereinheit | | |
| L2 | Länge der Erwärmungseinheit | | |
| P | Randbereich der PUR-Schicht | | |
| R | Rotationsrichtung | | |
| S | Schubrichtung | | |

## Patentansprüche

1. Vorrichtung zum Bereitstellen von Klebstoff (1) ohne ein Klebstoffbecken, mit
- einer Fördereinheit (4), aufweisend ein erstes Fördermittel (17), einen ersten Einlass (3) und einen ersten Auslass (6), durch welche ein zumindest teilweise als Feststoff vorliegender Klebstoff gefördert wird,
- einer Erwärmungseinheit (7), aufweisend einen zweiten Einlass (9) und einen zweiten Auslass (10a), sowie ein erstes Heizmittel (19, 20) zur Erweichung und/oder Verflüssigung des Klebstoffs,
- und einer Dosiereinheit (14), aufweisend einen Dosiereinlass (10b), einen Längsschlitz (11), sowie eine Walze (13), **dadurch gekennzeichnet, dass** der Dosiereinheit (14) ein Mitte (34) zum Auftragen einer eingefärbten Substanz und/oder eines Färbemittels angrenzend an eine über die Länge des Längsschlitzes auf der Oberfläche (26) der Walze abgelegte Klebstoffschicht zugeordnet ist.

2. Vorrichtung nach Anspruch 1, **dadurch gekennzeichnet, dass** eine erste Schließvorrichtung und/oder eine zweite Schließvorrichtung zwischen Förder- und Erwärmungseinheit (4, 7) bzw. zwischen Erwärmungs- und Dosiereinheit (7, 14) angeordnet und jeweils steuer- und/oder regelbar sind.

3. Vorrichtung nach einem der vorangehenden Ansprüche, **dadurch gekennzeichnet, dass** die Heizmittel steuer- und/oder regelbar sind, wobei wenigstens ein Temperaturfühler mit der Steuer- und/oder Regeleinheit zusammenwirkt.

4. Vorrichtung nach einem der vorangehenden Ansprüche, **dadurch gekennzeichnet, dass** die Dosiereinheit (14) ein Mittel zur Längenverstellung (23) des Längsschlitzes (11) aufweist.

5. Vorrichtung nach einem der vorangehenden Ansprüche, **dadurch gekennzeichnet, dass** die Dosiereinheit (14) ein Mittel zur Breitenverstellung des Längsschlitzes (11) aufweist.

6. Vorrichtung nach einem der vorangehenden Ansprüche, **dadurch gekennzeichnet, dass** die Dosiereinheit (14) Mittel zum Verschließen des Längsschlitzes (11) aufweist.

7. Vorrichtung nach einem der vorangehenden Ansprüche, **dadurch gekennzeichnet, dass** der Walze (13) ein Mittel zum Vergleichmäßigen einer auf der Walze abgelegten Klebstoffschicht zugeordnet ist.

8. Vorrichtung nach einem der vorangehenden Ansprüche, **dadurch gekennzeichnet, dass** die Walze (13) mit Mitteln (51) zum Klappen oder Verschwenken ausgestattet ist.

9. Verfahren zum Bereitstellen von Klebstoff unter Einsatz einer Vorrichtung nach einem der vorangehenden Ansprüche, wobei ein zumindest teilweise als Feststoff vorliegender Klebstoff in einer Fördereinheit (4) unter einen Förderdruck gesetzt und in eine Erwärmungseinheit (7) gefördert wird, in der der Klebstoff unter Einwirkung von Wärme erweicht und/oder verflüssigt wird und in eine Dosiereinheit (14) gefördert wird, wobei der erwärmte und/oder verflüssigte Klebstoff durch einen Längsschlitz (11) auf einer Walze (13) abgelegt wird, und wobei ein Mittel zum Auftragen einer eingefärbten Substanz und/oder eines Färbemittels angrenzend an die Klebstoffschicht vorgesehen ist.

## Claims

1. Device for providing adhesive (1) without an adhesive tank, with
- a conveyor unit (4), having a first conveying means (17), a first inlet (3) and a first outlet (6), through which an adhesive present at least partially as a solid is conveyed,
- a heating unit (7), comprising a second inlet (9) and a second outlet (10a), as well as a first means for heating (19, 20) for softening and/or liquefying the adhesive,
- and a dosing unit (14), comprising a dosing inlet (10b), a longitudinal slot (11) and a roller (13),
**characterized in that**
the dosing unit (14) is assigned a means (34) for applying a colored substance and/or a coloring agent adjacent to an adhesive layer deposited over the length of the longitudinal slot on the surface (26) of the roller.

2. Device according to claim 1, **characterized in that** a first closing device and/or a second closing device are arranged between the conveying unit and the heating unit (4, 7) or between the heating unit and the dosing unit (7, 14) and can be controlled and/or regulated in each case.

3. Device according to one of the preceding claims, **characterized in that** the means for heating can be controlled and/or regulated, wherein at least one temperature sensor interacts with the control unit and/or regulation unit.

4. Device according to one of the preceding claims, **characterized in that** the dosing unit (14) has a means for length adjustment (23) of the longitudinal slot (11).

5. Device according to one of the preceding claims, **characterized in that** the dosing unit (14) has a means for adjusting the width of the longitudinal slot (11).

6. Device according to one of the preceding claims, **characterized in that** the dosing unit (14) has means for closing the longitudinal slot (11).

7. Device according to one of the preceding claims, **characterized in that** the roller (13) is assigned a means for equalizing an adhesive layer deposited on the roller.

8. Device according to one of the preceding claims, **characterized in that** the roller (13) is equipped with means (51) for folding or pivoting.

9. Method for providing adhesive using a device according to one of the preceding claims, wherein an adhesive which is present at least partially as a solid is placed under a conveying pressure in a conveyor unit (4) and is conveyed into a heating unit (7) in which the adhesive is softened and/or liquefied under the effect of heat and is conveyed into a dosing unit (14), wherein the heated and/or liquefied adhesive is deposited on a roller (13) through a longitudinal slot (11), and wherein a means for applying a colored substance and/or a coloring agent is provided adjacent to the adhesive layer.

## Revendications

1. Dispositif pour mise à disposition d'adhésif (1) sans réservoir d'adhésif, avec
- une unité de transport (4), comportant un premier moyen de transport (17), une première entrée (3) et une première sortie (6), à travers laquelle un adhésif présent au moins partiellement sous forme solide est transporté,
- une unité de chauffage (7), comprenant une deuxième entrée (9) et une deuxième sortie (10a), ainsi qu'un premier moyen de chauffage (19, 20) pour ramollir et/ou liquéfier l'adhésif,
- et une unité de dosage (14), comprenant une entrée de dosage (10b), une fente longitudinale (11) et un rouleau (13),
**caractérisé par le fait que**
l'unité de dosage (14) est dotée d'un moyen (34) pour appliquer une substance colorée et/ou un agent colorant à côté d'une couche adhésive déposée sur la longueur de la fente longitudinale sur la surface (26) du rouleau.

2. Dispositif selon la revendication 1, **caractérisé par le fait qu'**un premier dispositif de fermeture et/ou un second dispositif de fermeture sont disposés entre l'-unité de transport et l'unité de chauffage (4, 7) ou entre l'unité de chauffage et l'unité de dosage (7, 14), quipeuvent être commandés et/ou réglés dans chaque cas.

3. Dispositif selon l'une des revendications précédentes, **caractérisé par le fait que** les moyens de chauffage peuvent être commandés et/ou régulés, dans lequel au moins un capteur de température interagit avec l'unité de contrôle et/ou l'unité de régulation.

4. Dispositif selon l'une des revendications précédentes, **caractérisé en ce que** l'- unité de dosage (14) comporte un moyen de réglage en longueur (23) de la fente longitudinale (11).

5. Dispositif selon l'une des revendications précédentes, **caractérisé en ce que** l'- unité de dosage (14) comporte un moyen de réglage de la largeur de la fente longitudinale (11).

6. Dispositif selon l'une des revendications précédentes, **caractérisé en ce que** l'-unité de dosage (14) comporte des moyens de fermeture de la fente longitudinale (11).

7. Dispositif selon l'une des revendications précédentes, **caractérisé en ce que** le rouleau (13) est doté d'un moyen d'égalisation d'une couche d'adhésif déposée sur le rouleau.

8. Dispositif selon l'une des revendications précédentes, **caractérisé en ce que** le rouleau (13) est équipé de moyens (51) de rabattre ou pivoter.

9. Procédé pour mise à disposition d'adhésif à l'aide d'un dispositif selon l'une des revendications précédentes, dans lequel un adhésif présent au moins partiellement sous forme solide est mis sous pression de transport dans une unité de transport (4) et est acheminé dans une unité de chauffage (7) dans laquelle l'adhésif est ramolli et/ou liquéfié sous l'effet de la chaleur et est acheminé dans une unité de dosage (14), l'adhésif chauffé et/ou liquéfié est déposé sur un rouleau (13) à travers une fente longitudinale (11), et un moyen d'application d'une substance colorée et/ou d'un agent colorant à proximité de la couche d'adhésif est prévu.
